# EUROPÄISCHE PATENTSCHRIFT

(11) **EP 1 102 646 B1**
(45) Veröffentlichungstag und Bekanntmachung des Hinweises auf die Patenterteilung: **05.07.2006**
(21) Anmeldenummer: 99953507.3
(22) Anmeldetag: 16.11.1999
(51) Int. Cl.: B08B 9/047, F16L 55/28

(54) **FRÄSGERÄT FÜR DIE ROHRREINIGUNGS- UND ROHRSANIERUNGSTECHNIK**
MILLING DEVICE FOR PIPE CLEANING AND SANITATION TECHNOLOGY
DISPOSITIF DE FRAISAGE POUR TECHNIQUE DE NETTOYAGE ET D'ASSAINISSEMENT DE CONDUITES

(30) Priorität: 19.11.1998 CH 232098
(43) Veröffentlichungstag der Anmeldung: 30.05.2001
(73) Patentinhaber: Winiger, Gerhard, 8636 Wald (CH)
(72) Erfinder: Winiger, Gerhard, 8636 Wald (CH)
(86) Internationale Anmeldenummer: PCT/CH1999/000540
(87) Internationale Veröffentlichungsnummer: WO 2000/030774

(56) Entgegenhaltungen:
- DE-A- 19 714 463
- DE-C- 4 022 543
- US-A- 5 378 092

## Beschreibung

Die Erfindung gemäss dem Oberbegriff des 1. Patentanspruchs betrifft ein Fräsgerät für den Einsatz in der Rohrreinigungs- und Rohrsanierungstechnik um Hindernisse oder Sanierungsmaterial weg- bzw. auszufräsen.

In der Rohrreinigungstechnik ist eine erhebliche Anzahl von unterschiedlichen Fräsgeräten bekannt, die zur Entfernung von festen Ablagerungen, einragenden Anschlussrohren und anderen Abflusshindernissen wie z.B. Wurzeleinwuchs dienen. In der Inliner-Rohrsanierungstechnik wie in US Pat. 4,009,063 und 4,067211 beschrieben sind Fräsgeräte für die Abschlussarbeiten notwendig. Hierzu werden oft ferngesteuerte Fräsgeräte eingesetzt wie z.B. in US Pat. 4,577,388 und 5,378,092 beschrieben und im Oberbegriff des 1. Anspruchs berücksichtigt, die die Aufgabe haben, den Inliner beim Seiteneinlauf von Anschlussrohren zu öffnen. Dabei wird entweder ein selbstfahrendes oder ein manuell mit Steuerruten positionierbares Grundgerät mit integrierter oder separater Kanalfernsehkamera und einem frei beweglichen Arm mit drehbarem Aufnahmekopf für unterschiedliche Werkzeuge eingesetzt. Der Einsatz dieser Geräte in der Rohrreinigung oder Rohrsanierung erfolgt unter externer oder interner Fernsehbeobachtung. Die Bedienung solcher Geräte erfordert ein hohes Mass an Erfahrung und Geschicklichkeit. Hinzu kommt der aufwändige mechanische und steuerungstechnische Aufbau der Geräte, der hohe Herstellkosten nach sich zieht. Somit ergeben sich in der Praxis Einschränkungen in der Anwendung und Bedienung. Ausserdem ist die Störanfälligkeit vor allem bei elektromechanischen Komponenten unter den gegebenen Arbeitsbedingungen im Rohr nicht zu vermeiden. Hinzu kommt der Hauptnachteil dieser Geräte, die mangelnde Bogengängigkeit in den Rohren, so dass dem Einsatz dieser Fräsgeräte Grenzen gesetzt sind.

Hier will die Erfindung Abhilfe schaffen. Die Erfindung, wie sie in den Ansprüchen gekennzeichnet ist, löst die Aufgabe, ein robustes und leicht bedienbares Fräsgerät für die Kanalreinigung- und Kanalsanierungstechnik mit günstigen Herstellkosten und einem breiten Einsatzbereich und mit Bogengängigkeit verfügbar zu machen.

In Abweichung von der bisher vorgeschlagenen Art, Fräsgeräte elektropneumatisch zu speisen sieht die besonders robuste und einfache Konstruktion der Erfindung vor, ohne elektrische Steuer- oder Antriebsenergie zu arbeiten. Hiermit werden Störungen durch Kurzschlüsse oder Kriechströme vermieden. Dies ist erfindungsgemäss derart gelöst, dass der mit einem Luftmotor angetriebene Fräser hydraulisch oder pneumatisch in seiner Vertikalachse mit einem Hydraulikzylinder stufenlos positioniert wird. Hierzu ist erfindungsgemäss vorgesehen, den Luftmotor des Fräsers zwischen einem U-förmigen Blech mit darin ausgebildeten parallelen Führungsnuten gleitend einzuspannen. Die parallel verlaufenden Führungsnuten im U-Blech können abhängig von der gestellten Aufgabe des Fräsgeräts jede nur mögliche Kurvenform aufweisen, vorzugsweise jedoch Geraden mit einem Anstiegswinkel im Bereich von 20 - 60° gegenüber der Lage des Fräsgeräts. Der im U-Blech mit einem Halter gleitend eingespannte Luftmotor wird erfindungsgemäss über zwei Drehpunkte mit der Hubstange des Hydraulikzylinders verbunden. Beim Ausfahren der Hubstange des Hydraulikzylinders wird der Fräsmotor entlang der Führungsnuten im U-Blech radial nach aussen abgeschwenkt und kann somit auch genügend weit in Seiteneinläufen arbeiten. Die Vorteile dieser vorgeschlagenen Art der Ansteuerung und Positionierung des Fräsmotors liegen einerseits im stufenlosen und exakten Bewegungsablauf mit spürbarer Elastizität bei Gegenkräften und andererseits in der einfachen und mit Gefühl durchzuführenden Arbeitsweise. Hierzu wird erfindungsgemäss vorgeschlagen, bei der hydraulischen Lösung den Hydraulikzylinder des Fräsgeräts über einen Druckschlauch in einem geschlossenen System mit einem zweiten Hydraulikzylinder zu verbinden. Die zur Bewegung des Fräser erforderliche Hydraulikölmenge und der Hydrauliköldruck kann nun im einfachsten Fall mit einem Handhebel oder -drehgriff erzeugt werden. Bei einer rein pneumatischen Lösung wird der Pneumatikzylinder mit Druckluft beaufschlagt. Im anspruchvollsten Fall kann ein computergestütztes Steuersystem den Hydraulikzylinder steuern. Zur besseren Bogengängigkeit des Fräsers ist das U-förmige Blech erfindungsgemäss gegenüber dem Spannkörper über einen diametral gegenüber dem untersten Punkt der Führungsnute angebrachten axialen Drehpunkt schwenkbar und mit einer Rückstellfeder ausgeführt. Die Aufnahme des zur radialen Abschwenkung des Fräsers vorgeschlagenen Hydraulik- oder Pneumatikzylinders erfolgt in einem Spannkörper. Der Spannkörper hat die Aufgabe, die beim Fräsvorgang auftretenden Kräfte aufzunehmen und ein exaktes Arbeiten durch hohe Stabilität der Fräserführung zu ermöglichen. Da Bogengängigkeit gefordert ist, wird erfindungsgemäss vorgeschlagen den Spannkörper im Auf- und Seitenriss H-förmig auszubilden. Die H-förmige Bauweise mit schlankem Mittelteil ermöglicht die Bogengängigkeit. Zur Abstützung der beim Fräsvorgang auftretenden Kräfte wird der Spannkörper mit dem Innenrohr verspannt. Dies übernehmen die radial angeordneten Pneumatikzylinder, die im Auf- und Seitenriss die vertikalen Balken der H-Form darstellen. Die Anzahl der radial angeordneten Pneumatikzylinder kann dabei mindestens drei auf beiden Seiten, vorzugsweise jedoch vier bis sechs pro Seite betragen. Durch Druckluftbeaufschlagung auf die durch den schlanken Mittelteil voneinander getrennt radial angeordneten Pneumatikzylinder fahren deren Kolbenstangen mit endig angebrachten tellerförmigen Spannpratzen radial heraus und verspannen somit den Spannkörpers an der Rohrinnenwand. Anstelle der tellerförmigen Spannpratzen können auch Kufen montiert werden, die jeweils zwei gegenüberliegende Pneumatikzylinder verbinden. Dies ist vor allem bei stark schadhaften Rohren vorzuziehen, wo Gefahr für ein Verklemmen der Spannpratzen besteht. Um bei Ausfall der Druckluftspeisung ein Festsitzen des Spannkörpers zu verhindern, sind die Pneumatikzylinder mit Rückstellfedern ausgerüstet.

Ein weiteres wesentliches Merkmal der Erfindung stellt die Ausbildung des Spannkörpers und die Anordnung der darin ausgebildeten Pneumatikzylinder und des Hydraulik- oder Pneumatikzylinders sowie die entsprechenden Leitungen zur Speisung der entsprechenden Zylinder dar. Der schlanke Mittelteil des Spannkörpers enthält erfindungsgemäss einen im vorderen Bereich waagrecht angeordneten Hydraulik- oder Pneumatikkolben, der innen eine Bohrung aufweist und mit der Halterung des Fräsmotors verbunden ist. Der Hydraulik- oder Pneumatikkolben ist bis auf ein schmales Zwischenstück, das den O-Ring für die Abdichtung gegenüber der Hubstange enthält, an beiden Seiten etwas abgedreht; rückseitig zur Ausbildung der Kolbenfläche und stirnseitig zur Aufnahme einer Rückstellfeder. Die Kolbenfläche wird gebildet durch die Durchmesserdifferenz zwischen dem Aussendurchmesser des schmalen Zwischenstücks und dem Innendurchmesser der Hubstange. Die Druckluftspeisung des Fräsmotors verläuft über die Innenbohrungen der Hubstange und des Hydraulikkolbens. Die Abdichtung des derart ausgebildeten Zylinders gegenüber der Druckluftspeisung übernimmt ein O-Ring am Ende des Kolbens. Der druckbeaufschlagten Fläche des Kolbens entgegengesetzt ist erfindungsgemäss eine Rückstellfeder vorgesehen, die bei Druckreduzierung den Fräser in die Ausgangsposition zurückdrückt. Der H-förmige Spannkörper ist erfindungsgemäss ausgebohrt mit im schlanken Zwischenteil etwas grösserem Durchmesser und enthält in dieser Längsbohrung die oben beschriebene in axialer Richtung verschiebbare und frei drehbare Hubstange, die den oben beschriebenen Hydraulik- oder Pneumatikzylinder mit zwei an beiden Enden vorgesehenen O-Ringen gegenüber der Umgebung abdichtend umschliesst. Diese Hubstange weist erfindungsgemäss in ihrem Rohrmantel zwei Längsbohrungen auf, wobei eine davon durch eine Radialbohrung den Rohrmantel gegen aussen durchbricht zur Druckluftspeisung der radial angeordneten Pneumatikzylinder über den im schlanken Mittelteil vorliegenden Ringspalt. Die zweite Längsbohrung durchbricht den dickwandigen Teil des Rohrmantels und dient zur Beaufschlagung des Hydraulik- oder Pneumatikzylinders über den Ringspalt, der der Kolbenfläche entspricht. Da erfindungsgemäss mit dieser längsverschiebbaren und drehbaren Hubstange die U-förmige Halterung des Fräsmotors über den Hydraulikkolben verbunden ist, kann nun der Fräser in zwei Achsen über torsionssteife Steuerruten oder einem Gestänge mit Hand oder mit Hilfe eines fahrbaren Steuergeräts über eine Signalleitung bedient werden. Die Ansteuerung der dritten Achse erfolgt wie schon beschrieben über einen Hydraulik- oder Pneumatikschlauch mit einem Hydraulik- oder Pneumatikzylinder. Der rückseitigen Abschluss des Spannkörpers bildet erfindungsgemäss ein Kupplungsstück mit den entsprechenden Kupplungen für die zwei Pressluftanschlüsse und das Hydrauliköl oder für die drei Pressluftanschlüsse. Zur feineren Bedienung ist erfindungsgemäss vorgesehen, das Gestänge zum Ankoppeln der Steuerrute oder eines fahrbaren Steuergeräts über ein dreiräderiges Stirnradgetriebe zu untersetzen. Durch die Wahl eines Getriebes über drei seriell im Eingriff befindliche Zahnräder wird verhindert, dass der Fräser bei Drehung mit der Steuerrute im Uhrzeigersinn eine Bewegung im Gegenuhrzeigersinn ausführt.

Im folgenden wird die Erfindung anhand von lediglich einen Ausführungsweg darstellenden Zeichnungen näher erläutert. Es zeigen
Fig. 1 den Längsschnitt durch das Fräsgerät
Fig. 2 den Schnitt A-A durch das Fräsgerät
Fig. 3 den Aufriss vom Fräsgerät

In den Figuren ist ein Fräsgerät für den Einsatz in der Rohrreinigungs- und Rohrsanierungstechnik für das Wegfräsen von Hindernissen oder zum öffnen von Seiteneinläufen von Anschlussrohren nach der Inliner-Sanierung dargestellt, welches in seinem grundsätzlichen Aufbau aus einem H-förmigen Spannkörper 14 mit an beiden Enden radial nach aussen sternförmig angeordneten vier Pneumatikzylindern, einem stirnseitigen Motorträger 4 mit Fräsmotor 3 und einem rückseitigen Getriebegehäuse 19 mit Antriebswelle 31 zur Steuerung des Fräsgerätes mittels Gestänge 21 und einem Kupplungsstück 22 zu einem ausserhalb des Rohrs sich befindlichen Handbediengriffs für die Bedienung und zur Ankupplung der Steuer- und Energieleitungen besteht.

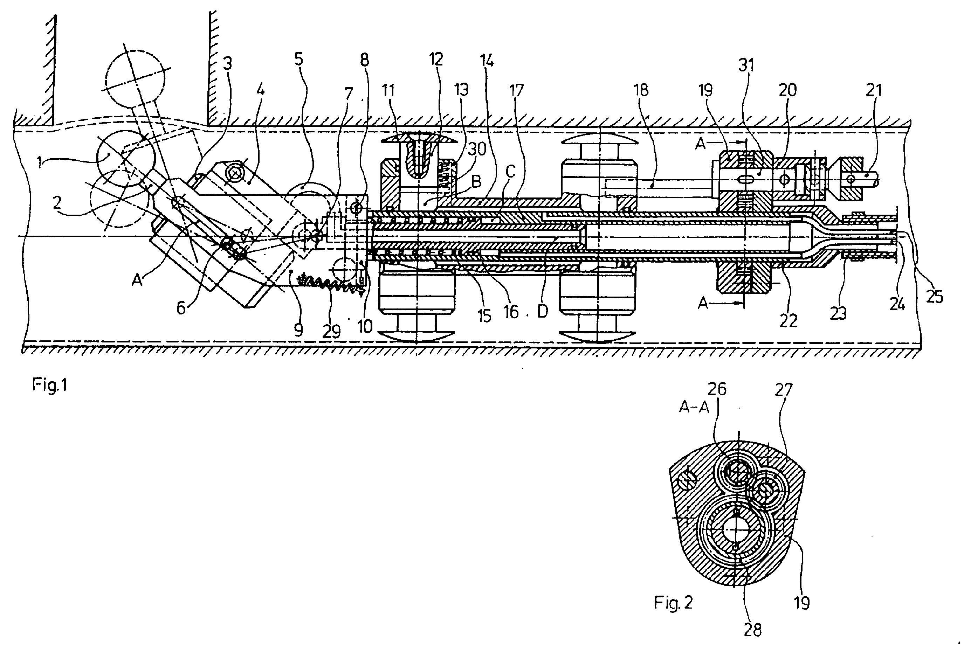

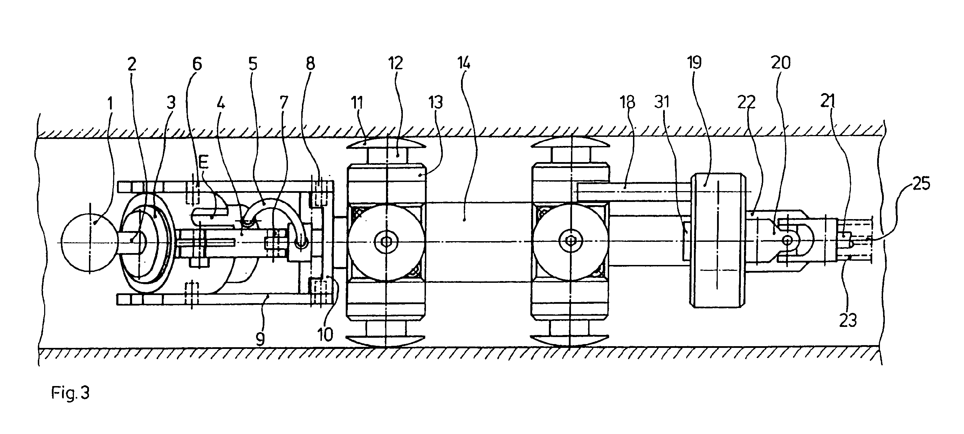

Fig. 1, 2 und 3 zeigen eine Ausführungsvariante des Fräsgeräts im Längsschnitt, im Schnitt A-A und im Aufriss wobei der Fräsmotor 3 über ein Gestänge 21 in zwei Achsen gesteuert werden kann; eine dritte Achse wird hydraulisch oder pneumatisch angesteuert. Drehbewegungen am Gestänge 21 oder einer torsionssteifen bogengängigen Steuerrute 21 werden über das Kardangelenk 20, welches sich endig auf der Antriebswelle 31 befindet, auf das Antriebsstirnrad 26 im Getriebegehäuse 19 und über ein Umlenkstirnrad 27 auf das Abtriebsstirnrad 28 übersetzt übertragen. Das Abtriebsstirnrad 28 ist fest mit der innen durchbohren Hubstange 17 verbunden, welche den Spannkörper 14 mittig durchdringt und an deren Kopf der Halter 9 mit dem Fräsmotor 3 befestigt ist. Somit werden Drehungen am Gestänge 21 direkt mit entsprechender Untersetzung aufgrund der Stirnradpaarung 26, 28 an den Fräsmotor 3 übertragen. Die Hubstange 17 ist im Spannkörper 14 an dessen beiden Enden mit je einem O-Ring abgedichtet, frei drehbar und in axialer Richtung begrenzt verschiebbar durch den Abstand zwischen der Rückseite des Spannkörpers 14 und der Vorderseite des 2-teiligen Getriebegehäuses, das mit einer Verdrehsicherung 18 gegenüber dem Spannkörper radial fixiert ist. Dieser Abstand darf nicht zu gross gewählt werden um die Bogengängigkeit des Fräsgerätes nicht zu schmälern. Die Hubstange 17 ist innen durchbohrt und enthält im vorderen Teil einen innen durchbohrten Kolben 16, dessen Länge etwa die Hälfte der Hubstangenlänge 17 ausmacht und dessen vorderer Bereich zur Aufnahme einer Druckfeder 15 abgedreht ist. Der Kolben 16 weist in der Mitte seiner Länge einen etwas grösseren Durchmesser zur Aufnahme eines O-Rings auf, der die Abdichtung gegenüber der Hubstange übernimmt. Der hintere Teil des Kolbens 16 ist im Durchmesser etwas abgedreht und steckt verschiebbar und mit einem zweiten O-Ring endig abgedichtet in der Hubstange 17. Die Durchmesserdifferenz zwischen den beiden Aussendurchmessern des Kolbens 16 ergibt den wirksamen Kreisring für die hydraulisch oder pneumatische Bewegung des Kolbens 16. Der Kolben 16 ist an seiner Stirnseite über einen Hubbolzen 7 und einem Führungsbolzen 6 mit dem Motorhalter 4 beweglich verbunden.

Bei Druckbeaufschlagung des Kolbens 16 wird der Motorhalter 4 axial nach vorne bewegt und drückt den im U-förmigen Halter 9 gleitend in parallel mit einem Winkel von 30° nach oben verlaufenden Führungsnuten A eingespannten Fräsmotor 3 radial nach aussen. Da der Kolben 16 hydraulisch oder pneumatisch beaufschlagt wird, kann der Kolben 16 bzw. der Fräsmotor 3 stufenlos in Zwischenposition gefahren werden. Zur Erhöhung der Bogengängigkeit ist der U-förmige Halter 9 über einen diametral gegenüber dem untersten Punkt der Führungsnuten A angebrachten Schwenkbolzen 8 mittels dem Schwenkhalter 10 axial schwenkbar ausgeführt. Zur Rückstellung des Halters 9 nach einem Bogendurchgang ist die zwischen dem Schwenkhalter 10 und Halter 9 eingespannte Zugfeder 29 bestimmt, die die beiden Teile zusammenzieht.

Der H-förmige Spannkörper 14 weist durch einen schlanken Mittelteil getrennt spiegelbildlich und in Sternform angeordnete zwei mal vier kubisch ausgebildete Pneumatikzylindergehäuse mit jeweils einem Deckel 13 auf. Die Pneumatikzylindergehäuse sind innen zylinderisch bis zur Hubstange 17 ausgebohrt. Zur Aufnahme von jeweils zwei Druckfedern 30 pro Zylinder sind die Zylinderinnenwände an zwei diametral gegenüberliegenden Seiten in Längsrichtung den inneren Zylindermantel durchbrechend mit einem dem Durchmesser der Druckfedern 30 angepassten Radius ausgefräst. Die Länge dieser Längsnuten ergibt sich aus der Dicke der Verdrehsicherung des Druckkolbens 12, die formschlüssig in die beiden Nuten eingreift und der Gesamtlänge der Druckfeder 30 abzüglich der Teillänge der Druckfeder 30, die in eine entsprechende Bohrung im Deckel zu stehen kommt. Der Deckel 13 weist innen eine zur Aufnahme des Druckkolbens 12 ausgebildete Bohrung auf und dichtet mit einem O-Ring den Druckkolben gegenüber dem Deckel 13 ab. Mit zwei 90° gegenüber den Nuten liegenden Schrauben wird der Deckel 13 am Spannkörper 14 fixiert. Der Druckkolben 12 weist an seinem Kolbenboden zwei um 180° versetzt angeordnete Verlängerungen als Verdrehsicherung und Endsteller auf, die derart ausgebildet sind, dass sie formschlüssig mit Spiel in die ausgefrästen Nutenform passen. Zwischen der Verdrehsicherung des Druckkolbens 12 und dem Grund der Bohrung im Deckel 13 zur Aufnahme der Druckfeder 30 ist jeweils die Druckfeder 30 eingespannt. Der Oberteil des Druckkolbens 12 wird abgeschlossen durch eine jeweils tellerförmige Spannpratze aus vorzugsweise abriebfestem Kunststoff, die mit einer Schraube am Kolbenkopf fixiert ist.

Der Fräsmotor 3 wird durch Druckluft über den Druckluftschlauch 23 gespiesen, der am Kupplungsstück 22 befestigt ist. Die Druckluft für den Fräsmotor 3 gelangt durch die Innenbohrung der Hubstange 17 über die Innenbohrung des Kolbens 16 mittels einem Schlauch 5 zum Fräsmotor 3. Die Druckluftspeisung zur Verspannung der acht Kolben am H-förmigen Spannkörper 14 erfolgt durch einen Pneumatikschlauch 25, der am Kupplungsstück 22 angeschlossen ist und vom Schlauch 23 für die Druckluftspeisung des Fräsmotors 3 umschlossen wird, über eine Längsbohrung im Hubstangenmantel 17, die diesen 17 im Bereich des schlanken Mittelstücks des Spannkörpers 14 radial nach aussen durchbricht, so dass über den Ringspalt im Spannkörper 14, gebildet durch eine etwas grössere Bohrung im schlanken Zwischenteil, alle acht Kolben gleichmässig beaufschlagt werden. Die zur radialen Abschwenkung des Fräsmotors 3 erforderliche Speisung mit Hydrauliköl oder Pressluft erfolgt über die am Kupplungsstück angeschlossene Hydrauliköl- oder Pressluftleitung 24, die ebenfalls vom Schlauch 23 für die Druckluftspeisung des Fräsmotors 3 umschlossen wird, über eine Längsbohrung im Hubstangenmantel 17, die diesen 17 bei der Stelle der grösseren Ausdrehung zur Aufnahme des Kolbenvorderteils 16 mit Druckfeder 15 durchbricht und zur Rückseite des Kolbens 16 führt.

## Patentansprüche

1. Fräsgerät für die Rohrreinigung und Rohrsanierung, bestehend aus einem stirnseitig an einen Spannkörper (14) angebrachten luftbetriebenen Fräsmotor (3) und einer rückseitig an den Spannkörper (14) über ein Kardangelenk (20) angekoppelten Steuerrute oder eines Gestänges zur externen Handsteuerung des Fräsmotors in seinen beweglichen Achsen, **dadurch gekennzeichnet, dass** das Fräsgerät hydraulisch oder pneumatisch gesteuert oder angetrieben wird, dass der Fräsmotor (3) hydraulisch oder pneumatisch in seiner Vertikalachse über Drehpunkte (6, 7) mit einem Hydraulik- oder Pneumatikzylinder (17) stufenlos radial nach aussen positioniert werden kann, dass der Spannkörper (14) H-förmig ausgebildet ist mit einem schlanken Mittelteil und endständig sternförmig angeordneten Pneumatikkkolben (12) zur Verspannung mit der Rohrinnenwand und dass der Hydraulik- oder Pneumatikzylinder (17) zugleich als frei drehbare und axial im Spannkörper verschiebbare Hubstange (17) ausgebildet ist.

2. Fräsgerät nach Patentanspruch 1, **dadurch gekennzeichnet, dass** der Fräsmotor (3) zwischen einem U-förmigen Halter (9, 9') mit darin ausgebildeten parallelen Führungsnuten (A) gleitend eingespannt ist und dass die parallel ausgebildeten Führungsnuten (A) jede mögliche Kurvenform aufweisen können, vorzugsweise jedoch Geraden mit einem Anstiegswinkel im Bereich von 20 - 45° gegenüber der Lage des Fräsgeräts.

3. Fräsgerät nach Patentanspruch 2, **dadurch gekennzeichnet, dass** der U-förmige Halter (9) zur besseren Bogengängikeit gegenüber dem Spannkörper (14) mit einem axialen Drehpunkt (8) schwenkbar und mit einer Zugfeder (29) zur Rückstellung ausgebildet ist.

4. Fräsgerät nach Patentanspruch 1, **dadurch gekennzeichnet, dass** der Hydraulik- oder Pneumatikkolben (16) eine Druckfeder (15) zur Rückstellung aufweist.

5. Fräsgerät nach Patentanspruch 1, **dadurch gekennzeichnet, dass** der Spannkörper (14) zur Druckluftbeaufschlagung der Kolben (12) in seinem schlanken Mittelteil eine im Durchmesser etwas grössere Bohrung, die zum Aussendurchmesser der Hubstange (17) einen Ringspalt bildet, aufweist.

6. Fräsgerät nach Patentanspruch 1, **dadurch gekennzeichnet, dass** die Hubstange (17) innen ausgebohrt ist als Druckluftleitung für den Fräsmotor (3) und dass ihr (17) Mantel zwei Längsbohrungen (24, 25) zur Speisung des Hydraulik- oder Pneumatikzylinders (17), mit Hydrauliköl oder Pressluft (C) und des Kolbens (12) mit Druckluft (B) aufweist.

7. Fräsgerät nach Anspruch 1, **dadurch gekennzeichnet, dass** die im Spannkörper (14) sternförmig ausgebildeten zwei mal 3 - 6 Kolben mit Druckfedern (30) zur selbständigen Rückstellung ausgebildet sind:

8. Fräsgerät nach Anspruch 1, **dadurch gekennzeichnet, dass** der Kolben (16) als Druckluftleitung innen eine Längsbohrung aufweist, die den äusseren Mantel vor dem Hubbolzen (7) zur Ankopplung einer flexiblen Leitung (5) zum Fräsmotor (3) durchbricht.

9. Fräsgerät nach Anspruch 1, **dadurch gekennzeichnet, dass** das den rückseitigen Abschluss bildende Kupplungsstück (22) mit zwei Anschlüssen für die Pressluftspeisung der Kolben (12) und der Hydraulikflüssigkeit oder Pressluft für den Kolben (16) und mit einem diese beiden Anschlüsse umschliessenden Schlauch (23) für die Pressluftspeisung des Fräsmotors (3) ausgebildet ist.

10. Fräsgerät nach Anspruch 1, **dadurch gekennzeichnet, dass** die Steuerbewegungen mit dem angekoppelten Gestänge (21) über ein dreiräderiges seriell angeordnetes in einem Gehäuse (19) gekapseltes Stirnradgetriebe (26, 27, 28) untersetzt und in synchroner Drehrichtung auf die Hubstange (17) übertragen wird.

## Claims

1. Milling device for pipe cleaning and sanitation technology, consisting of an air driven milling motor (3) fitted on the front of a blocking body (14) and with a control rod coupled on the rear of the blocking body (14) by way of a universal joint (20) or alternatively with a linkage for external manual control of the milling motor in its moveable axes **characterised in that** the milling motor is controlled or driven either hydraulically or pneumatically, **in that** the milling motor (3) can be continuously positioned radially outwards hydraulically or pneumatically in its vertical axis by means of pivots (6, 7) with a hydraulic or pneumatic cylinder (17), **in that** the blocking body (14) is H shaped with a thin middle section and pneumatic pistons (12) standing on end and in a star-shaped formation for bracing against the pipe internal surfaces and **in that** the hydraulic or pneumatic cylinder (17) at the same time is fitted as a freely rotating lifting mechanism (17) capable of sliding into the blocking body.

2. Milling device according to Claim 1 **characterised in that** the milling motor (3) is flexibly held within a U-shaped support (9, 9') which has parallel guide channels (A) and that the parallel guide channels (A) can form all possible curves, preferably however straights with an angle of inclination in the region of 20 - 45° with reference to the position of the milling device.

3. Milling device according to Claim 2 **characterised in that** the U-shaped support (9), in order to improve the ability to bow, is constructed opposite the blocking body (14) with a flexible axial pivot (8) and also with a tension spring (29) for the return.

4. Milling device according to Claim 1 **characterised in that** the hydraulic or pneumatic pistons (16) have a tension spring (15) for the return.

5. Milling device according to Claim 1 **characterised in that** the blocking body (14) has a bore of larger diameter in its thin middle section, which forms an annular slot with the external diameter of the lifting mechanism (17), for acting on the piston (12) with compressed air.

6. Milling device according to Claim 1 **characterised in that** the lifting mechanism (17) is bored out inside as a path for the compressed air for the milling motor (3) and that its casing has two longitudinal bores (24, 25) for feeding the hydraulic or pneumatic cylinders (17) with hydraulic oil or compressed air (C) and the pistons (12) with compressed air.

7. Milling device according to Claim 1 **characterised in that** the two times 3 ie 6 pistons, which are in star-shape formation in the blocking body (14) are fitted with pressure springs (30) for independent returning.

8. Milling device according to Claim 1 **characterised in that** the pistons (16) have a longitudinal bore as a path for compressed air, which breaks through the outer casing before the lifting bolts (7) for coupling a flexible lead (5) to the milling motor (3).

9. Milling device according to Claim 1 **characterised in that** the rear connector piece (22) forming the cut off is fitted with two connectors for the compressed air supply to the pistons (12) and the hydraulic fluid or compressed air for the pistons (16) and with a hose (23) which encloses both these connections for the compressed air supply for the milling device (3).

10. Milling device according to Claim 1 **characterised in that** the control movements are reduced on the coupled linkage (21), by means of a three wheeled, encapsulated spur-gear system (26, 27, 28), serially arranged within a housing (19) and is transferred to the lifting mechanism (17) in synchronized direction of revolution.

## Revendications

1. Dispositiv de fraisage pour le nettoyage des tuyauteries et l'assainissement des tuyauteries, constitué d'un moteur de fraisage (3) monté sur la face frontale sur un corps de serrage (14) et fonctionnant à l'air comprimé et d'une baguette de commande accouplée sur la face arrière au corps de serrage (14) par l'intermédiaire d'une articulation à cardan (20) ou d'une tringlerie pour la commande manuelle externe du moteur de fraisage dans ses axes mobiles, **caractérisé en ce que** :
- l'Dispositiv de fraisage est commandé ou entraîné par action hydraulique ou pneumatique ;
- le moteur de fraisage (3) peut être positionné progressivement en sens radial vers l'extérieur dans son axe vertical par action hydraulique ou pneumatique sur des pivots (6,7) avec un cylindre hydraulique ou pneumatique (17) ;
- le corps de serrage (14) est réalisé en forme de H avec une partie centrale mince et des pistons pneumatiques (12) agencés sur la partie terminale en forme d'étoile pour le serrage avec la paroi intérieure de tuyauterie ; et
- le cylindre hydraulique ou pneumatique (17) est réalisé en même temps comme tige de levage (17) pouvant tourner librement et pouvant être déplacée en sens axial dans le corps de serrage.

2. Dispositiv de fraisage selon la revendication 1, **caractérisé en ce que** le moteur de fraisage (3) est encastré avec possibilité de coulissement entre un support en forme de U (9, 9') muni de rainures de guidage parallèles (A) ménagées dedans et **en ce que** les rainures de guidage réalisées parallèlement (A) peuvent présenter chaque forme de courbe possible, de préférence toutefois des lignes droites, avec un angle de montée dans la plage de 20 à 45° par rapport à la position de l'Dispositiv de fraisage.

3. Dispositiv de fraisage selon la revendication 2, **caractérisé en ce que** le support en forme de U (9) est réalisé avec faculté de pivotement avec un pivot axial (8) pour une meilleure faculté de flexion par rapport au corps de serrage (14) et avec un ressort de traction (29) pour le rappel.

4. Dispositiv de fraisage selon la revendication 1, **caractérisé en ce que** le piston hydraulique ou pneumatique (16) présente un ressort de compression (15) pour le rappel.

5. Dispositiv de fraisage selon la revendication 1, **caractérisé en ce que**, pour l'alimentation en air comprimé des pistons (12), le corps de serrage (14) présente dans sa partie centrale mince un perçage d'un diamètre un peu plus grand qui forme une fente annulaire envers le diamètre extérieur de la tige de levage (17).

6. Dispositiv de fraisage selon la revendication 1, **caractérisé en ce que** la tige de levage (17) est creusée à l'intérieur comme conduite d'air comprimé pour le moteur de fraisage (3) et **en ce que** la gaine de ladite tige (17) présente deux perçages longitudinaux (24, 25) pour alimenter le cylindre hydraulique ou pneumatique (17) en huile hydraulique ou en air de pressage (C) et pour alimenter le piston (12) en air comprimé (B).

7. Dispositiv de fraisage selon la revendication 1, **caractérisé en ce que** les deux fois 3 = 6 pistons réalisés en forme d'étoile dans le corps de serrage (14) sont réalisés avec des ressorts de pression (30) pour le rappel automatique.

8. Dispositiv de fraisage selon la revendication 1, **caractérisé en ce que** le piston (16), comme conduite d'air comprimé, présente à l'intérieur un perçage longitudinal qui traverse la gaine extérieure devant le goujon de levage (7) pour l'accouplement d'une conduite flexible (5) vers le moteur de fraisage (3).

9. Dispositiv de fraisage selon la revendication 1, **caractérisé en ce que** la pièce d'accouplement (22) qui forme la terminaison sur la face arrière est réalisée avec deux raccords pour l'alimentation en air de pressage des pistons (12) et en liquide hydraulique ou en air de pressage pour le piston (16), et avec un tuyau flexible (23) entourant ces deux raccords pour l'alimentation en air de pressage du moteur de fraisage (3).

10. Dispositiv de fraisage selon la revendication 1, **caractérisé en ce que** les mouvements de commande sont démultipliés avec la tringlerie accouplée (21) par l'intermédiaire d'un réducteur à roues droites encapsulé (26, 27, 28) à trios roues agencé en série dans un carter (19) et sont transmis sur la tige de levage (17) dans un sens de rotation synchrone.
